# EUROPEAN PATENT APPLICATION

(11) **EP 3 454 242 A1**
(43) Date of publication of application: **13.03.2019**
(21) Application number: 18193669.1
(22) Date of filing: 11.09.2018
(51) Int. Cl.: G06F 21/32, G06K 9/00

(54) **METHOD FOR COLLECTING FACIAL INFORMATION AND RELATED PRODUCTS**

(30) Priority: 12.09.2017 CN 201710817126
(71) Applicant: Guangdong OPPO Mobile Telecommunications Corp., Ltd., Dongguan, Guangdong 523860 (CN)
(72) Inventor: WANG, Jian, Dongguan Guangdong 523860 (CN)
(74) Representative: Manitz Finsterwald Patentanwälte PartmbB

(57) **Abstract**

Embodiments of the present disclosure disclose a method for collecting facial information and related products. The method includes: displaying (S201, S301, S401, S501) a guiding interface on a displaying interface of a mobile terminal and activating a facial information collection apparatus in response to detecting an instruction for starting facial information enrolling, in which the guiding interface is configured to display a piece of prompt information for the facial information enrolling; and collecting (S202, S502), by the facial information collection apparatus, the facial information, in which the facial information is configured to determine a facial information template, and the facial information template is configured to be compared with target facial information collected by the facial information collection apparatus to unlock the mobile terminal. Embodiments of the present disclosure may be beneficial to improve a speed of the facial information enrolling and security of the terminal.

## Description

### TECHNICAL FIELD

The present disclosure relates to a mobile terminal technology field, and more particularly relates to a method for collecting facial information and related products.

### BACKGROUND

With the continuous development and progress of the society, the popularity of the usage of mobile terminals has increased. The mobile terminals such as mobile phones, tablet computers, etc., occupy a significant place in human's lives. As the mobile terminals have more and more functions, the mobile terminals may be used for more purposes by installing applications such as a banking application, an instant messaging application, etc.. Thus, the mobile terminals have been gradually becoming an indispensable tool in human's lives.

The more applications installed in the mobile terminal, the more data information representing the user's privacy. Therefore, in order to prevent data leakage caused by the mobile terminal being stolen by others, the user may enhance the security of the mobile terminal by setting password protection such as a numeric password and a pattern password etc. for the mobile terminal.

However, in prior art, when the user uses the mobile terminal in a crowded area, the password set by the user is easily seen by others, leading to a leakage of the user's privacy, thereby reducing the security of the mobile terminal.

### SUMMARY

Embodiments of the present disclosure provide a method for collecting facial information and related products to improve a speed of inputting the facial information, and also provide an unlocking method based on the facial information to improve security of a mobile terminal.

Embodiments of the present disclosure provide a mobile terminal. The mobile terminal may include: a facial information collection apparatus, a memory and a processor. The facial information collection apparatus is coupled to the processor, and the processor is coupled to the memory. The processor is configured to display a guiding interface on a displaying interface of the mobile terminal and to activate the facial information collection apparatus in response to detecting an instruction for starting facial information enrolling, and the guiding interface is configured to display a piece of prompt information for the facial information enrolling. The facial information collection apparatus is configured to collect the facial information, the facial information is configured to determine a facial information template, and the facial information template is configured to be compared with target facial information collected by the facial information collection apparatus to unlock the mobile terminal. The memory is configured to store the facial information template.

In an embodiment, the processor is further configured to display a preview interface on the displaying interface of the mobile terminal, and the preview interface includes an image currently captured by the facial information collection apparatus of the mobile terminal.

In an embodiment, when the processor displays the preview interface the displaying interface of the mobile terminal, the processor is configured to: display the preview interface on the displaying interface of the mobile terminal after a preset time period starting from a time when the facial information collection apparatus is activated.

In an embodiment, the guiding interface includes a button for triggering to enter the preview interface, and when the preview interface is displayed on the displaying interface of the mobile terminal, the processor is configured to: detect a touch operation on the button; and display the preview interface on the displaying interface of the mobile terminal in response to detecting the touch operation.

In an embodiment, the facial information collection apparatus is configured to collect at least one facial image; the processor is configured to process the at least one facial image to obtain the facial information template; and the memory is configured to store the facial information template.

In an embodiment, the processor is further configured to: update the guiding interface in real time based on the image captured by the facial information collection apparatus.

Embodiments of the present disclosure provide a method for collecting facial information. The method may include: displaying a guiding interface on a displaying interface of a mobile terminal and activating a facial information collection apparatus in response to detecting an instruction for starting facial information enrolling, in which the guiding interface is configured to display a piece of prompt information for the facial information enrolling; and collecting, by the facial information collection apparatus, the facial information, in which the facial information is configured to determine a facial information template, and the facial information template is configured to be compared with target facial information collected by the facial information collection apparatus to unlock the mobile terminal.

In an embodiment, the method may also include: displaying a preview interface on the displaying interface of the mobile terminal, and the preview interface includes an image currently captured by the facial information collection apparatus of the mobile terminal.

In an embodiment, displaying the preview interface on the displaying interface of the mobile terminal includes: displaying the preview interface on the displaying interface of the mobile terminal after a preset time period starting from a time when the facial information collection apparatus is activated.

In an embodiment, the guiding interface includes a button for triggering to enter the preview interface, and displaying the preview interface on the displaying interface of the mobile terminal includes: detecting a touch operation on the button; and displaying the preview interface on the displaying interface of the mobile terminal in response to detecting the touch operation.

In an embodiment, collecting the facial information by the facial information collection apparatus includes: collecting at least one facial image; processing the at least one facial image to obtain the facial information template; and storing the facial information template.

In an embodiment, the method also includes: updating the guiding interface in real time based on the image captured by the facial information collection apparatus.

In an embodiment, the method also includes: performing a pre-processing on the at least one facial image, and extracting facial feature points from the at least one facial image.

In an embodiment, the method also includes: sending the at least one facial image to a server via a communication module of the mobile terminal, and receiving facial feature points from the server via the communication module, wherein the facial feature points are extracted by the server from the at least one facial image.

Embodiments of the present disclosure provide a computer readable storage medium. The computer readable storage medium stores computer programs for exchanging digital data, in which the computer programs are executed to cause a computer to perform all or a part of acts in a method for collecting facial information, and the computer may include a mobile terminal.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

### BRIEF DESCRIPTION OF THE DRAWINGS

In order to make the technical solutions of embodiments of the present disclosure or prior art more clearly, the accompanying drawings used in the description of embodiments of the present disclosure or the prior art are briefly described hereafter. Obviously, the described drawings are merely some embodiments of present disclosure. For persons skilled in the art, other drawings may be obtained based on these drawings without any creative work.
Fig. 1 is a unit diagram of a mobile terminal disclosed by an embodiment of the present disclosure.
Fig. 2 is a schematic flow chat of a method for collecting facial information disclosed by an embodiment of the present disclosure.
Fig. 2-1 is a schematic effect diagram of a guiding interface disclosed by an embodiment of the present disclosure.
Fig. 2-2 is a schematic effect diagram of a preview interface disclosed by an embodiment of the present disclosure.

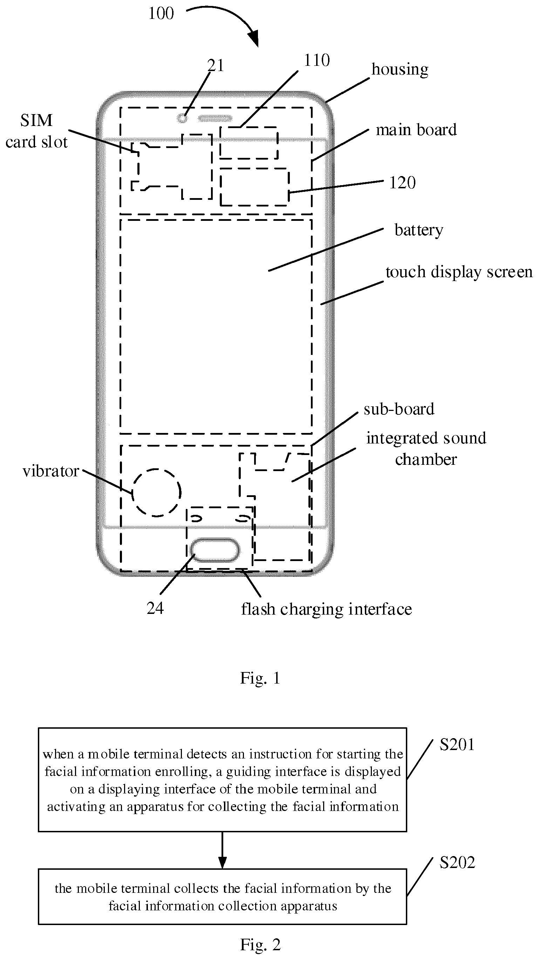

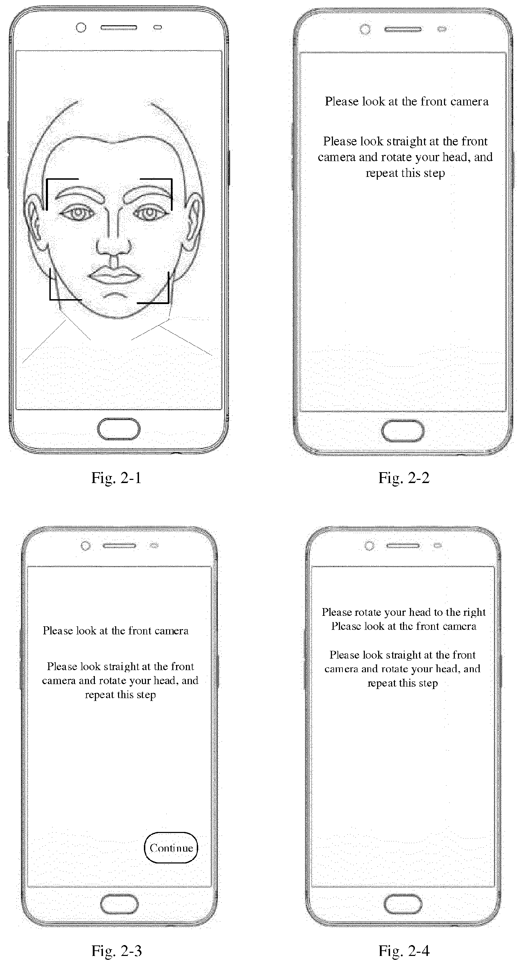

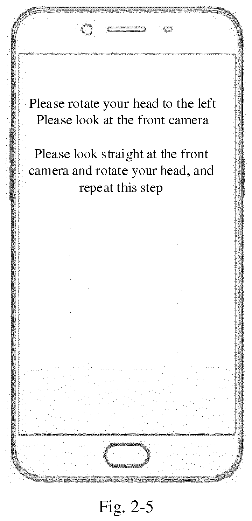

Fig. 2-3 is a schematic effect diagram of a guiding interface disclosed by another embodiment of the present disclosure.
Fig. 2-4 is a schematic effect diagram of a guiding interface disclosed by another embodiment of the present disclosure.
Fig. 2-5 is a schematic effect diagram of a guiding interface disclosed by another embodiment of the present disclosure.

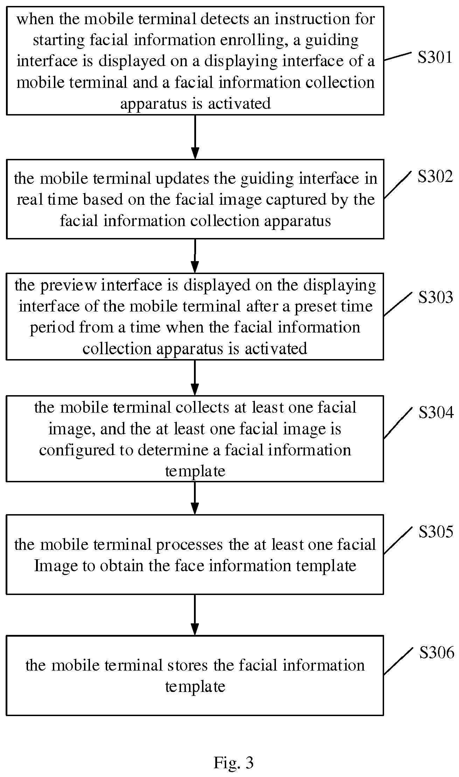

Fig. 3 is a schematic flow chat of a method for collecting facial information disclosed by another embodiment of the present disclosure.

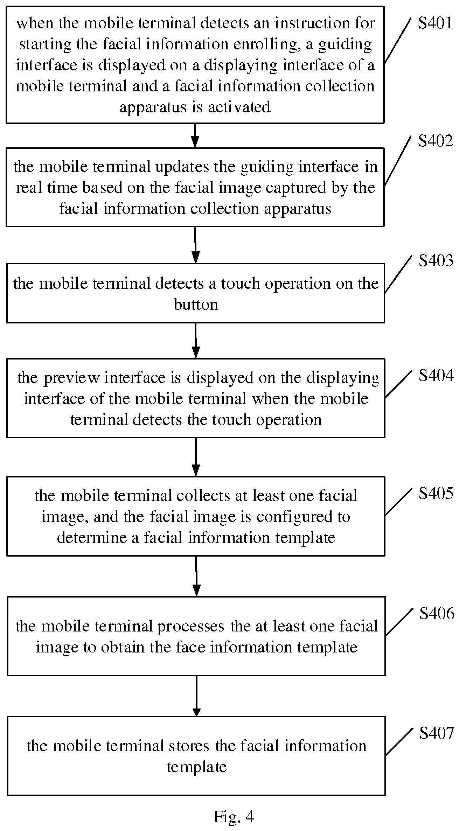

Fig. 4 is a schematic flow chat of a method for collecting facial information disclosed by another embodiment of the present disclosure.

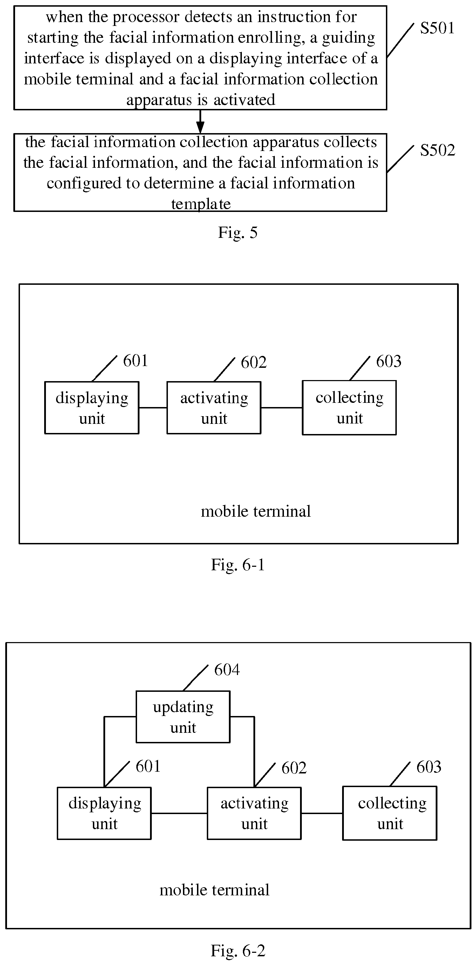

Fig. 5 is a schematic flow chat of a method for collecting facial information disclosed by another embodiment of the present disclosure.
Fig. 6-1 is a unit diagram of a mobile terminal disclosed by an embodiment of the present disclosure.
Fig. 6-2 is a unit diagram of a mobile terminal disclosed by an embodiment of the present disclosure.

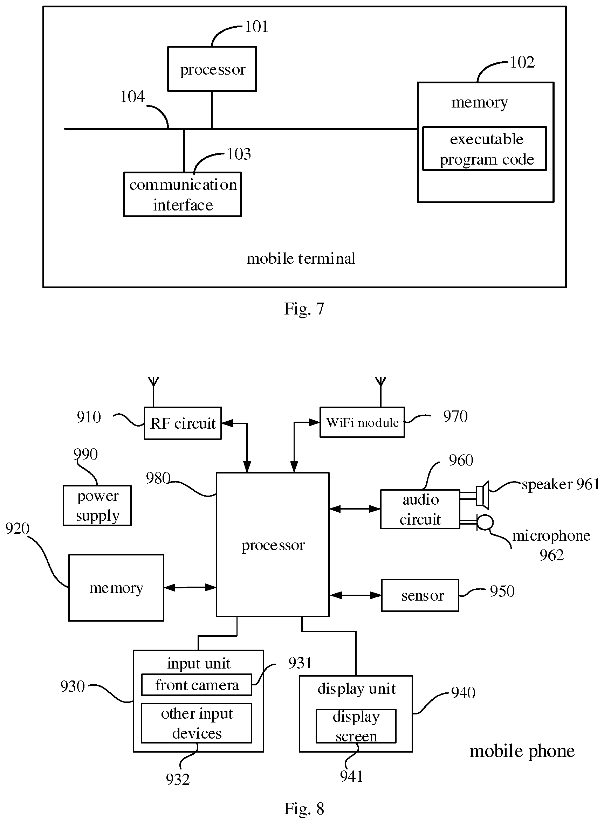

Fig. 7 is a block diagram of a mobile terminal disclosed by an embodiment of the present disclosure.
Fig. 8 is a block diagram of a mobile terminal disclosed by another embodiment of the present disclosure.

### DETAILED DESCRIPTION

For a better understanding of the present disclosure for the skilled in the art, the technical solutions in embodiments of the present disclosure are hereinafter described clearly and completely with reference to accompanying drawings in embodiments of the present disclosure. Apparently, embodiments described are a part of embodiments of the present disclosure, instead of all embodiments. Other embodiments obtained by those skilled in the art based on the embodiments in the present disclosure without creative labor shall fall in the protection scope of the present disclosure.

Terms such as "first", "second", "third", "fourth" and the like used in the specification, in claims and in drawings are configured herein for distinguishing different subjects, but not for describing a particular order. Furthermore, the terms such as "include", "comprise" and any other variations thereof are intended to be non-exclusive. For example, a process, a method, a system, a product or a device including or comprising a sequence of blocks or units is not limited to include or comprise the listed blocks or unit, instead, they alternatively further include or comprise other blocks and units that are not listed or alternatively further include inherent blocks or units of the process, the method, the system, the product or the device.

Term such as "embodiments" referred herein means that, particular features, structures and characteristics described in combination with embodiments may be covered in at least one embodiment of the present disclosure. Usages of the term for many times in the specification are not necessary to refer to a same embodiment or same embodiments, and they are not independent embodiments mutually exclusive with other embodiments or unimportant embodiments. It may be explicitly or implicitly understood by those skilled in the art that, embodiments described herein may be combined with other embodiments.

For a better understanding of the method for collecting facial information and the mobile terminal disclosed in the embodiments of the present disclosure, embodiments of the present disclosure will be described in detail hereinafter.

The mobile terminal involved in embodiments of the present disclosure may include various devices having a wireless communication functions, such as a portable device, a vehicle-mounted device, a wearable device, a computing device or other processing device connected to a wireless modem, and various forms of user equipment (UE), mobile stations (MS), terminal devices and the like. For a convenient description, the above-mentioned devices are collectively referred to as the mobile terminal.

A facial information collection apparatus may be set in the mobile terminal described in embodiments of the present disclosure. The apparatus for collecting facial information may be a common camera module such as a front camera. Embodiments of the present disclosure will be described with reference to drawings.

Referring to Fig. 1, Fig. 1 is a schematic structure diagram of a mobile terminal (100) provided by an embodiment of the present disclosure. The mobile terminal (100) may include a housing, a touch display screen, a main board, a battery, and a sub-board. The main board is provided with a front camera (21), a processor (110), a memory (120), an SIM card slot and the like. The sub-board is provided with a vibrator, an integrated sound chamber, and a VOOC flash charging interface. The front camera (21) constitutes a facial information collection apparatus of the mobile terminal (100).

The processor 110 is configured to display a guiding interface on a displaying interface of the mobile terminal and to activate the facial information collection apparatus in response to detecting an instruction for starting facial information enrolling, in which the guiding interface being configured to display a piece of prompt information for the facial information enrolling.

The facial information collection apparatus is configured to collect the facial information, the facial information is configured to determine a facial information template, and the facial information template is configured to be compared with target facial information collected by the facial information collection apparatus to unlock the mobile terminal.

The memory (120) is configured to store the facial information template.

The front camera (21) is configured to collect a facial image of the user. After the processor 110 acquires the facial image, a preprocessing may be performed on the facial image to extract facial feature points from the facial image. In an embodiment, the facial image may be sent to a server such that the facial image is preprocessed by the server to extract the facial feature points from the facial image.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

In an embodiment, the processor is also configured to display a preview interface on the displaying interface of the mobile terminal, in which the preview interface may include an image currently captured by the facial information collection apparatus of the mobile terminal.

In an embodiment, when the preview interface is displayed on the displaying interface of the mobile terminal, the processor (110) is configured to: display the preview interface on the displaying interface of the mobile terminal after a preset time period starting from a time when the facial information collection apparatus is activated.

In an embodiment, the guiding interface may include a button for triggering to enter the preview interface, and when the preview interface is displayed on a displaying interface of the mobile terminal, the processor (110) is configured to: detect a touch operation on the button; and display the preview interface on the displaying interface of the mobile terminal in response to detecting the touch operation.

In an embodiment, the facial information collection apparatus is configured to collect at least one facial image. The processor (110) is configured to process the at least one facial image to obtain the facial information template. The memory (120) is configured to store the facial information template.

In an embodiment, the processor (110) is also configured to: update the guiding interface in real time based on the facial image captured by the facial information collection apparatus.

In an embodiment, the processor (110) is also configured to perform a pre-processing on the at least one facial image, and to extract facial feature points from the at least one facial image.

In an embodiment, the mobile terminal also include a communication module coupled to the processor. The communication module is configured to send the at least one facial image captured by the facial information collection apparatus to a server, and to receive facial feature points sent by the server. The facial feature points are extracted by the server from the at least one facial image.

In an embodiment, the processor (110) is also configured to match the target facial information with the facial information template and to unlock the mobile terminal when the target facial information is matched with the facial information template.

Referring to Fig. 2, Fig. 2 is a schematic flow chat of a method for collecting facial information disclosed by an embodiment of the present disclosure. As illustrated in Fig. 2, the method for collecting the facial information in the embodiment of the present disclosure may include followings.

At block S201, when a mobile terminal detects an instruction for starting the facial information enrolling, a guiding interface is displayed on a displaying interface of the mobile terminal and activating a facial information collection apparatus, in which the guiding interface is configured to display a piece of prompt information for the facial information enrolling.

Specifically, a specific implementation manner for detecting the instruction for starting the facial information enrolling by the mobile terminal may be detecting a click operation for a facial information inputting button by the mobile terminal. When the instruction for starting the facial information enrolling is detected by the mobile terminal, the mobile terminal may display the guiding interface on the displaying interface of the mobile terminal and may activate the facial information collection apparatus at the same time, thereby improving the speed of the facial information enrolling. The guiding interface is configured to display a piece of prompt information for the facial information enrolling, and the effect diagram of the guiding interface is illustrated in Fig. 2-1.

At block S202, the mobile terminal collects the facial information by the facial information collection apparatus, in which the facial information is configured to determine a facial information template, and the facial information template is configured to be compared with target facial information collected by the facial information collection apparatus to unlock the mobile terminal.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

In an embodiment, after displaying the guiding interface on the displaying interface of the mobile terminal and activating the facial information collection apparatus, and before collecting the facial information by the facial information collection apparatus, the method may also include: displaying a preview interface on the displaying interface of the mobile terminal, in which the preview interface may include an image currently captured by the facial information collection apparatus of the mobile terminal.

The effect diagram of the preview interface is illustrated in Fig. 2-2. The preview interface is configured to display the image captured by the apparatus for collecting facial information for the user's reference and adjusting the shooting angle.

In an embodiment, displaying the preview interface on the displaying interface of the mobile terminal may include: displaying the preview interface on the displaying interface of the mobile terminal after a preset time period starting from a time when the facial information collection apparatus is activated.

Specifically, when the facial information collection apparatus is activated while the preview interface is displayed on the displaying interface of the mobile terminal, since a speed of loading the preview interface is greater than a speed of activating the facial information collection apparatus, first few frames (generally the first three frames) display on the preview interface are black screens. Therefore, in order to avoid the appearance of the above black screens, the preview interface is displayed after the preset time period starting from a time when the facial information collection apparatus is activated.

In an embodiment, the guiding interface may include a button for triggering to enter the preview interface, and displaying the preview interface on the displaying interface of the mobile terminal may include: detecting a touch operation on the button; and displaying the preview interface on the displaying interface of the mobile terminal in response to detecting the touch operation.

Specifically, the guiding interface may include a button for triggering to enter the preview interface, the effect diagram of the guiding interface is illustrated in Fig. 2-3. Referring to Fig. 2-3, when a touch operation for the button is detected, the mobile terminal switches the current guiding interface to the preview interface.

In an embodiment, collecting the facial information by the facial information collection apparatus may include: collecting at least one facial image; processing the at least one facial image to obtain the facial information template; and storing the facial information template.

Specifically, the front camera may collect at least one facial image of the user. The mobile terminal may perform a preprocessing on the facial image and extract facial feature points from the facial image, so as to acquire the facial information template. When an unlocking event of the mobile terminal is detected, the mobile terminal matches the collected facial information with the above facial information template. When it is detected that the collected facial information is matched to the above facial information template, the mobile terminal may perform an unlocking operation, such that the security of the mobile terminal may be improved.

In an embodiment, after displaying the guiding interface on the displaying interface of the mobile terminal and activating the facial information collection apparatus, the method may also include: updating the guiding interface in real time based on the facial image captured by the facial information collection apparatus.

Specifically, the guiding interface may be updated in real time according to the facial image captured by the facial information collection apparatus. When the mobile terminal detects that the user does not look straight at the front camera by the facial information collection apparatus, a piece of information prompting the user to rotate his/her head to look straight at the front camera may be displayed on the guiding interface. In an embodiment, When the mobile terminal detects that the user's face is left shifted with respect to the front camera by the facial information collection apparatus, the effect diagram of the guiding interface is illustrated in Fig. 2-4. In another embodiment, when the mobile terminal detects that the user's face is right shifted with respect to the front camera by the facial information collection apparatus, the effect diagram of the guiding interface is illustrated in Fig. 2-5.

Consistent with the embodiment illustrated in Fig. 2, referring to Fig. 3, Fig. 3 is a schematic flow chat of a method for collecting facial information disclosed by another embodiment of the present disclosure. As illustrated in Fig. 3, the method for collecting facial information in the embodiment of the present disclosure may include followings.

At block S301, when the mobile terminal detects an instruction for starting the facial information enrolling, a guiding interface is displayed on a displaying interface of a mobile terminal and a facial information collection apparatus is activated, in which the guiding interface is configured to display a piece of prompt information for the facial information enrolling.

At block S302, the mobile terminal updates the guiding interface in real time based on the facial image captured by the facial information collection apparatus.

At block S303, the preview interface is displayed on the displaying interface of the mobile terminal after a preset time period starting from a time when the facial information collection apparatus is activated.

At block S304, the mobile terminal collects at least one facial image, in which the at least one facial image is configured to determine a facial information template, and the facial information template is configured to be compared with target facial information collected by the facial information collection apparatus to unlock the mobile terminal.

At block S305, the mobile terminal processes the at least one facial image to obtain the facial information template.

At block S306, the mobile terminal stores the facial information template.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

Consistent with the embodiments illustrated in Fig. 2 or Fig. 3, referring to Fig. 4, Fig. 4 is a schematic flow chat of a method for collecting facial information disclosed by another embodiment of the present disclosure. As illustrated in Fig. 4, the method for collecting facial information in the embodiment of the present disclosure may include followings.

At block S401, when the mobile terminal detects an instruction for starting the facial information enrolling, a guiding interface is displayed on a displaying interface of a mobile terminal and a facial information collection apparatus is activated.

The guiding interface is configured to display a piece of prompt information for the facial information enrolling, and the guiding interface includes a button for triggering to enter the preview interface.

At block S402, the mobile terminal updates the guiding interface in real time based on a facial image captured by the facial information collection apparatus.

At block S403, the mobile terminal detects a touch operation on the button.

At block S404, the preview interface is displayed on the displaying interface of the mobile terminal when the mobile terminal detects the touch operation.

At block S405, the mobile terminal collects at least one facial information image, in which the at least one facial image is configured to determine a facial information template, and the facial information template is configured to be compared with target facial information collected by the facial information collection apparatus to unlock the mobile terminal.

At block S406, the mobile terminal processes the at least one facial image to obtain the facial information template.

At block S407, the mobile terminal stores the facial information template.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

Referring to Fig. 5, Fig. 5 is a schematic flow chat of a method for collecting facial information disclosed by another embodiment of the present disclosure. As illustrated in Fig. 5, the method for collecting facial information in the embodiment of the present disclosure may include followings.

At block S501, when the processor detects an instruction for starting the facial information enrolling, a guiding interface is displayed on a displaying interface of a mobile terminal and a facial information collection apparatus is activated, in which the guiding interface is configured to display a piece of prompt information for the facial information enrolling.

At block S502, the facial information collection apparatus collects the facial information, in which the facial information is configured to determine a facial information template, and the facial information template is configured to be compared with target facial information collected by the facial information collection apparatus to unlock the mobile terminal.

In an embodiment, after displaying the guiding interface on the displaying interface of the mobile terminal and activating the facial information collection apparatus, and before collecting the facial information by the facial information collection apparatus, the method may also include: displaying, by the processor, a preview interface on the displaying interface of the mobile terminal, and the preview interface includes an image currently captured by the facial information collection apparatus of the mobile terminal.

In an embodiment, displaying the preview interface on the displaying interface of the mobile terminal by the processor may include: displaying, by the processor, the preview interface on the displaying interface of the mobile terminal after a preset time period starting from a time when the facial information collection apparatus is activated.

In an embodiment, the guiding interface may include a button for triggering to enter the preview interface, and displaying the preview interface on the displaying interface of the mobile terminal by the processor may include: detecting, by the processor, a touch operation on the button; and displaying, by the processor, the preview interface on the displaying interface of the mobile terminal in response to detecting the touch operation.

In an embodiment, collecting the facial information by the facial information collection apparatus may include: collecting, by the facial information collection apparatus, at least one facial image; processing, by the processor, the at least one facial image to obtain the facial information template; and storing, by the memory, the facial information template.

In an embodiment, after the processor displays the guiding interface on the displaying interface of the mobile terminal and activates the facial information collection apparatus, the method may also include: updating, by the processor, the guiding interface in real time based on the facial image captured by the facial information collection apparatus.

It can be seen that, with the method for collecting the facial information provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

Apparatus embodiments of the present disclosure will be described hereinafter. The apparatus embodiments of the present disclosure are used to perform the method described in the method embodiments. Referring to Fig. 6-1, Fig. 6-1 is a unit diagram of a mobile terminal disclosed by an embodiment of the present disclosure. As illustrated in Fig. 6-1, the mobile terminal may include a displaying unit 601, an activating unit 602 and a collecting unit 603.

The displaying unit 601 is configured to display a guiding interface on a displaying interface of a mobile terminal in response to detecting an instruction for starting facial information enrolling.

The activating unit 602 is configured to activate a facial information collection apparatus, in which the guiding interface is configured to display a piece of prompt information for the facial information enrolling.

The collecting unit 603 is configured to collect the facial information by the facial information collection apparatus, in which the facial information is configured to determine a facial information template, and the facial information template is configured to be compared with target facial information collected by the facial information collection apparatus to unlock the mobile terminal.

Referring to Fig. 6-2, Fig. 6-2 is a unit diagram of a mobile terminal disclosed by an embodiment of the present disclosure. As illustrated in Fig. 6-2, the mobile terminal may include a displaying unit 601, an activating unit 602 and a collecting unit 603 in the embodiment corresponding to Fig. 6-1.

In an embodiment, the displaying unit 601 is also configured to display a preview interface on the displaying interface of the mobile terminal, in which the preview interface may include an image currently captured by the facial information collection apparatus of the mobile terminal.

In an embodiment, when the preview interface is displayed on the displaying interface of the mobile terminal, the displaying unit 601 is configured to: display the preview interface on the displaying interface of the mobile terminal after a preset time period starting from a time when the facial information collection apparatus is activated.

In an embodiment, the guiding interface may include a button for triggering to enter the preview interface, and when the preview interface is displayed on a displaying interface of the mobile terminal, the displaying unit 601 is configured to: detect a touch operation on the button; and display the preview interface on the displaying interface of the mobile terminal in response to detecting the touch operation.

In an embodiment, the collecting unit 603 is configured to collect at least one facial image, to process the at least one facial image to obtain the facial information template, and to store the facial information template.

In an embodiment, the mobile terminal may also include an updating unit 604. The updating unit 604 is configured to update the guiding interface in real time based on the image captured by the facial information collection apparatus.

Specifically, specific implementations of the above-mentioned units may refer to the description of relative acts in embodiments corresponding to Figs. 2-4, which will not be described herein.

It should be noted that the mobile terminal described in the apparatus embodiments of the present disclosure is presented in a form of a functional unit. The term "unit" used herein shall be understood to have the broadest meaning. The objects for implementing the functions described for each "unit" may be, for example, an integrated circuit ASIC, a single circuit, a processor of for executing one or more software or firmware programs (shared, dedicated or chipset, and a memory, a combinational logic circuit, and/or other suitable components for realizing the above functions.

For example, when the above-described displaying unit 601 detects the instruction for starting the facial information enrolling, the function of displaying the guiding interface on the displaying interface may be realized by the mobile terminal illustrated in Fig. 7. Specifically, the processor 101 may invoke executable program codes stored in the memory 102, and when the instruction of starting the facial information enrolling, the guiding interface may be displayed on the displaying interface of the mobile terminal.

It can be seen that, with the mobile terminal provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

Embodiments of the present disclosure also provide another mobile terminal. As illustrated in Fig. 7, the mobile terminal may include: a processor 101, a memory 102, a communication interface 103, and a communication bus 104. The processor 101, the memory 102, and the communication interface 103 are coupled and communicated with each other via the communication bus 104. The processor 101 may control a wireless communication with an external cellular network via the communication interface 103. The communication interface 103 includes, but is not limited to, an antenna, an amplifier, a transceiver, a coupler, a low noise amplifier (LNA), a duplexer, and the like. The memory 102 may include at least one of a random access memory, a nonvolatile memory and an external memory. The memory 102 may store executable program codes capable of cause the processor 101 to perform the method for collecting facial information disclosed in method embodiments of the present disclosure.

The processor 101 is configured to display a guiding interface on a displaying interface of the mobile terminal and to activate the facial information collection apparatus in response to detecting an instruction for starting facial information enrolling, in which the guiding interface is configured to display a piece of prompt information for the facial information enrolling. The processor 101 is also configured to collect the facial information by the facial information collection apparatus, in which the facial information is configured to determine a facial information template, and the facial information template is configured to be compared with target facial information collected by the facial information collection apparatus to unlock the mobile terminal. The memory is configured to store the facial information template.

In an embodiment, after displaying the guiding interface on the displaying interface of the mobile terminal and activating the facial information collection apparatus, and before collecting the facial information by the facial information collection apparatus, the processor 101 is also configured to display a preview interface on the displaying interface of the mobile terminal, in which the preview interface may include an image currently captured by the facial information collection apparatus of the mobile terminal.

In an embodiment, when the preview interface is displayed on the displaying interface of the mobile terminal, the processor 101 is also configured to display the preview interface on the displaying interface of the mobile terminal after a preset time period starting from a time when the facial information collection apparatus is activated.

In an embodiment, the guiding interface may include a button for triggering to enter the preview interface, and when the preview interface is displayed on the displaying interface of the mobile terminal, the processor 101 is also configured to detect a touch operation on the button, and to display the preview interface on a displaying interface of the mobile terminal when the touch operation is detected.

In an embodiment, when the facial information is collected by the facial information collection apparatus, the processor 101 is also configured to: collect at least one facial image; process the at least one facial image to obtain the facial information template; and store the facial information template.

In an embodiment, the processor 101 is also configured to update the guiding interface in real time based on the facial image captured by the facial information collection apparatus.

Specifically, specific implementations of the above-mentioned units may refer to the description of relative acts in embodiments corresponding to Figs. 2-4, which will not be described herein.

It can be seen that, with the mobile terminal provided by embodiments of the present disclosure, when an instruction for starting the facial information enrolling is detected, a guiding interface may be displayed on a displaying interface of a mobile terminal and activating a facial information collection apparatus, in which the guiding interface is configured to display a piece of prompt information for the facial information enrolling. The facial information collection apparatus may collect the facial information, in which the facial information is configured to determine a facial information template, and the facial information template is configured to be compared with target facial information collected by the facial information collection apparatus to unlock the mobile terminal. Therefore, according to the method for collecting facial information, when the instruction for starting the facial information enrolling is detected, the guiding interface may be displayed and the facial information collection apparatus may be activated simultaneously, such that the speed of collecting the facial information may be improved, thereby providing an unlocking method based on the facial information, which is beneficial to improve the security of the mobile terminal.

Embodiments of the present disclosure also provide another mobile terminal. As illustrated in Fig. 8, for the convenience of description, only parts related to the embodiments of the present disclosure are illustrated. Details that are not disclosed may refer to the method embodiments of the present disclosure. The mobile terminal may be any mobile terminal including a mobile phone, a tablet computer, a PDA (personal digital assistant), a point of sales (POS), a car computer, and the like. The mobile terminal being a mobile phone is taken as an example.

Fig. 8 is a block diagram illustrating a partial structure of a mobile phone related to a mobile terminal provided by an embodiment of the present disclosure. Referring to Fig. 8, the mobile phone includes: a radio frequency (RF) circuit 910, a memory 920, an input unit 930, a display unit 940, a sensor 950, an audio circuit 960, a wireless fidelity (Wi-Fi) module 970, processor 980, a power supply 990 and other components. It will be understood by those skilled in the art that the structure of the mobile phone illustrated in Fig. 8 does not constitute a limitation to the mobile phone, and may include more or less components than those illustrated, or some components may be combined, or the components may be arranged differently.

The components of the mobile phone will be described in followings in detail with reference to Fig. 8.

The RF circuit 910 may be configured to receive and to transmit information. Generally, RF circuit 910 includes, but is not limited to, an antenna, at least one amplifier, a transceiver, a coupler, a low noise amplifier (LNA), a duplexer, and the like. In addition, the RF circuitry 910 may also communicate with the network and other devices via wireless communication. The above wireless communication may use any communication standard or protocol, including but not limited to global system of mobile communication (GSM), general packet radio service (GPRS), code division multiple access (code division). Multiple access (CDMA), wide band code division multiple access (WCDMA), Long Term Evolution (LTE), e-mail, short messaging service (SMS), and the like.

The memory 920 may be configured to store software programs and modules, and the processor 980 executes various functional applications and data processing of the mobile phone by running software programs and modules stored in the memory 920. The memory 920 may mainly include a program storage area and a data storage area, in which the program storage area may store an operating system, an application required for at least one function, and the like; the data storage area may store data created according to usage of the mobile phone, and the like. Moreover, the memory 920 may include a high speed random access memory, and may also include a non-volatile memory, such as at least one magnetic disk storage device, flash memory device, or other volatile solid state storage device.

The input unit 930 may be configured to receive inputted numeric or character information and to generate key signal inputs related to user settings and function controls of the mobile phone. Specifically, the input unit 930 may include a front camera 931 and other input devices 932. The front camera 931 may collect facial information of the user. The input unit 930 may also include other input devices 932 besides the front camera 931. Specifically, other input devices 932 may include, but are not limited to, one or more of a fingerprint recognition module, a physical keyboard, a function key (such as a volume control button, a switch button, etc.), a trackball, a mouse, a joystick, and the like.

The display unit 940 may be configured to display information inputted by the user or information provided to the user and various menus of the mobile phone. The display unit 940 may include a display screen 941. In an embodiment, the display screen 941 may be configured in the form of a liquid crystal display (LCD), an organic light-emitting diode (OLED) and the like. Although the front camera 931 and the display 941 illustrated in Fig. 8 are two separate components to implement the input and output functions of the mobile phone, in some embodiments, the front camera 931 may be integrated with the display 941 so as to realize the input and output functions of the mobile phone.

The mobile phone may also include at least one type of sensor 950, such as a light sensor, a motion sensor, and other sensors. Specifically, the light sensor may include an ambient light sensor and a proximity sensor, in which the ambient light sensor may adjust the brightness of the display screen 941 according to the brightness of the ambient light, and the proximity sensor may turn off the display screen 941 and/or the backlight when the mobile phone moves towards the ear. As a kind of motion sensor, the accelerometer sensor may detect the acceleration of each direction (usually three axes), may detect the magnitude and direction of gravity when the sensor is static, and may be configured to identify applications of the gesture of the mobile phone (such as horizontal and vertical screen switching, related games, magnetometer attitude calibration) and vibration recognition related functions (such as pedometer, tapping) and the like. Other sensors such as a gyroscope, barometers, a hygrometer, a thermometer, an infrared sensor, etc. may be configured on the mobile phone, which will not be described herein.

The audio circuit 960, the speaker 961, and the microphone 962 may provide an audio interface between the user and the mobile phone. The converted electrical data of the received audio data may be transmitted by the audio circuit 960 to the speaker 961 then converted to the sound signal output by the speaker 961. On the other hand, the collected sound signal may be converted by the microphone 962 to an electrical signal, received and converted to an audio signal by the audio circuit 960, and processed by the audio data output processor 980 and sent to another mobile phone via the RF circuit 910, or the audio data is outputted to the memory 920 for further processing.

Wi-Fi is a short-range wireless transmission technology. The mobile phone may help users to send and receive an e-mail, to browse a web page and to access streaming media via the Wi-Fi module 970. It provides users with wireless broadband Internet access. Although the Wi-Fi module 970 is illustrated in Fig. 8, it may be understood that it does not belong to an essential configuration of the mobile phone, and may be omitted as needed within the scope of not changing the essence of the present disclosure.

The processor 980 is the control center of the mobile phone, and various portions of the entire mobile phone may be connected via various interfaces and lines, by running or executing software programs and/or modules stored in the memory 920, and invoking data stored in the memory 920, various functions of the mobile phone may be performed and data may be processed, such that the mobile phone may be monitored. In an embodiment, the processor 980 may include one or more processing units. Preferably, the processor 980 may integrate an application processor and a modem processor, in which the application processor mainly processes an operating system, a user interface, an application, and the like. The modem processor primarily processes wireless communications. It will be appreciated that the above described modem processor may not be integrated into the processor 980.

The mobile phone also includes a power source 990 (such as a battery) to power up the various components. Preferably, the power source can be logically coupled to the processor 980 via a power management system, so as to manage charging, discharging, and power management functions via the power management system.

Although not illustrated, the mobile phone may also include a Bluetooth module and the like, which will not be described herein.

In the foregoing embodiments illustrated in Fig. 2, Fig. 3 and Fig. 4, each act in the method flow may be implemented based on the structure of the mobile phone.

In the embodiments illustrated in the foregoing Fig. 6-1 and Fig. 6-2, functions of each unit may be implemented based on the structure of the mobile phone.

Embodiments of the present disclosure also provide a computer program product including a non-transitory computer readable storage medium storing a computer program, the computer program is operative to cause a computer to perform all or a part of acts of any method for collecting facial information described in the foregoing method embodiments.

Embodiments of the present disclosure also provide a computer storage medium, in which the computer storage medium may store a program, and the program includes all or a part of acts of any method for collecting facial information described in the foregoing method embodiments.

It should be noted that, for convenience and simplicity of description, the above method embodiments are described in a form of a combination of a series of steps. However, those skilled in the art may understand clearly that, the present disclosure is not limited by the order of the steps, since some steps according to present disclosure may be performed simultaneously or in other orders. In addition, those skilled in the art can understand clearly that, the described embodiments are preferred embodiments, of which relative steps or modules may be unnecessary for the present disclosure.

In above embodiments, each embodiment may be described focusing on different aspects. Parts not be described in some embodiments may refer to relative descriptions in other embodiments.

In embodiments provided by the present disclosure, it should be understood that, the disclosed apparatus may be realized in any other manner. For example, the apparatus embodiments described above can be merely exemplary, for example, the units are just divided according to logic functions, for example, the division of the units is merely a logical functional division and there may be other dividing manners. For example, multiple units or components can be combined or integrated into another system, or some features can be omitted or not executed. In addition, the mutual coupling or direct coupling or communication connection described or discussed can be via some interfaces, and indirect coupling or communication connection between devices or units may be electrical, mechanical or of other forms.

The units illustrated as separate components can be or not be separated physically, and components described as units can be or not be physical units, i.e., can be located at one place, or can be distributed onto multiple network units. It is possible to select some or all of the units according to actual needs, for realizing the objective of embodiments of the present disclosure.

In addition, respective functional units in respective embodiments of the present disclosure can be integrated into one processing unit, or can be present as separate physical entities. It is also possible that two or more than two units are integrated into one unit. The above integrated unit may be realized in a manner of hardware or a software functional unit.

When the functions are realized in form of functional software units and are sold or used as separate products, they can be stored in a computer readable storage medium. Based on this understanding, the parts of the technical solutions or the essential parts of the technical solutions (i.e. the parts making a contribution to the related art) can be embodied in form of software product, which is stored in a storage medium, and includes several instructions used for causing a computer device (for example, a personal computer, a server or a network device) to execute all or part of steps in the methods described in respective embodiments of the present disclosure. The above storage medium may be any medium capable of storing program codes, including a USB flash disk, a mobile hard disk, a Read-Only Memory (ROM), a Random Access Memory (RAM), a disc, or a light disk.

It should be understood that all or a part of the method provided by the present disclosure may be realized by programs instructing relative hardware, the programs may be stored in a computer-readable memory. The memory may include a flash disk, an ROM, an RAM, a magnet disk, a light disk and the like. The embodiments of the present disclosure have been described in detail above, and the principles and implementations of the present disclosure are described herein with reference to specific examples. The description of the above embodiments is merely for helping to understand the method of the present disclosure and its core ideas.

## Claims

1. A mobile terminal (100), comprising: a facial information collection apparatus, a memory (120) and a processor (110), wherein the facial information collection apparatus is coupled to the processor (110), and the processor (110) is coupled to the memory (120), in which,
the processor (110) is configured to display a guiding interface on a displaying interface of the mobile terminal (100) and to activate the facial information collection apparatus in response to detecting an instruction for starting facial information enrolling, the guiding interface being configured to display a piece of prompt information for the facial information enrolling;
the facial information collection apparatus is configured to collect the facial information, the facial information being configured to determine a facial information template, and the facial information template being configured to be compared with target facial information collected by the facial information collection apparatus to unlock the mobile terminal; and
the memory (120) is configured to store the facial information template.

2. The mobile terminal (100) according to claim 1, wherein the processor (110) is further configured to display a preview interface on the displaying interface of the mobile terminal (100), and the preview interface comprises an image currently captured by the facial information collection apparatus of the mobile terminal (100).

3. The mobile terminal (100) according to claim 2, wherein when the processor (110) displays the preview interface the displaying interface of the mobile terminal (100), the processor (110) is configured to:
display the preview interface on the displaying interface of the mobile terminal (100) after a preset time period starting from a time when the facial information collection apparatus is activated.

4. The mobile terminal (100) according to claim 2, wherein the guiding interface comprises a button for triggering to enter the preview interface, and when the preview interface is displayed on the displaying interface of the mobile terminal (100), the processor (110) is configured to:
detect a touch operation on the button; and
display the preview interface on the displaying interface of the mobile terminal (100) in response to detecting the touch operation.

5. The mobile terminal (100) according to any of claims 1 to 4, wherein the facial information collection apparatus is configured to collect at least one facial image;
the processor (110) is configured to process the at least one facial image to obtain the facial information template; and
the memory (120) is configured to store the facial information template.

6. The mobile terminal (100) according to any of claims 1 to 5, wherein the processor (110) is further configured to:
update the guiding interface in real time based on the image captured by the facial information collection apparatus.

7. A method for collecting facial information, comprising:
displaying (S201, S301, S401, S501) a guiding interface on a displaying interface of a mobile terminal and activating a facial information collection apparatus in response to detecting an instruction for starting facial information enrolling, the guiding interface being configured to display a piece of prompt information for the facial information enrolling; and
collecting (S202, S502), by the facial information collection apparatus, the facial information, the facial information being configured to determine a facial information template, and the facial information template being configured to be compared with target facial information collected by the facial information collection apparatus to unlock the mobile terminal.

8. The method according to claim 7, wherein the method further comprises:
displaying (S303) a preview interface on the displaying interface of the mobile terminal, and the preview interface comprises an image currently captured by the facial information collection apparatus of the mobile terminal.

9. The method according to claim 8, wherein displaying the preview interface on the displaying interface of the mobile terminal comprises:
displaying the preview interface on the displaying interface of the mobile terminal after a preset time period starting from a time when the facial information collection apparatus is activated.

10. The method according to claim 8, wherein the guiding interface comprises a button for triggering to enter the preview interface, and displaying the preview interface on the displaying interface of the mobile terminal comprises:
detecting (S403) a touch operation on the button; and
displaying (S404) the preview interface on the displaying interface of the mobile terminal in response to detecting the touch operation.

11. The method according to any of claims 7-10, wherein collecting the facial information by the facial information collection apparatus comprises:
collecting (S304, S405) at least one facial image;
processing (S305, S406) the at least one facial image to obtain the facial information template; and
storing (S306, S407) the facial information template.

12. The method according to any of claims 7-11, wherein the method further comprises:
updating (S302, S402) the guiding interface in real time based on the image captured by the facial information collection apparatus.

13. The method according to claim 11, further comprising:
performing a pre-processing on the at least one facial image, and extracting facial feature points from the at least one facial image.

14. The method according to claim 11, further comprising:
sending the at least one facial image to a server via a communication module of the mobile terminal, and
receiving facial feature points from the server via the communication module, wherein the facial feature points are extracted by the server from the at least one facial image.

15. A computer readable storage medium for storing computer programs for exchanging digital data, wherein the computer programs are executed to cause a computer to perform the method according to any of claims 7-14, and the computer comprises a mobile terminal.
